# EUROPEAN PATENT SPECIFICATION

(11) **EP 0 667 100 B1**
(45) Date of publication and mention of the grant of the patent: **22.09.1999**
(21) Application number: 95101130.3
(22) Date of filing: 26.01.1995
(51) Int. Cl.: A21D 13/00

(54) **Method for preparing spring roll**
Verfahren zur Herstellung von einer Frühlingsrolle
Méthode pour la préparation de rouleaux de printemps

(30) Priority: 28.01.1994 JP 845994
(43) Date of publication of application: 16.08.1995
(73) Proprietor: NICHIREI CORPORATION, Tokyo 104 (JP)
(72) Inventor: Matsuo, Kenji, Nagareyama-shi, Chiba-ken (JP); Uchiyama, Jun, Koshigaya-shi, Saitama-ken (JP)
(74) Representative: Wehnert, Werner, Dipl.-Ing. Patentanwälte Hauck, Graalfs, Wehnert, Döring, Siemons

(56) References cited:
- EP-A- 0 510 764
- US-A- 4 741 908
- US-A- 4 753 813
- PATENT ABSTRACTS OF JAPAN vol. 14, no. 544 (C-0784) 04 December 1990 & JP-A-02 231 062 (NOMURA KIYOSHI) 13 September 1990

## Description

This invention relates to a method for producing a spring roll. The spring roll belongs to dim sum, a Chinese meal. Its Japanese equivalent is termed "harumaki" which is loved by many people. The spring roll is produced by cutting meat of animals, fishes or shells and plants such as vegetables in fine stripes and frying the stripes with oil to obtain an ingredient material, rolling the ingredient material with a dough sheet of wheat flour or the like in an elongated roll and frying the roll with cooking oil maintained at a lower cooking temperature.

Document Patent Abstracts of Japan, vol-14, no.544 (C-0748), 4/12/90 discloses a method for producing a spring roll.

In general, it is desired of the spring roll to have both the crispy mouth feel touch proper to its dough sheet and the soft mouth feel touch of the ingredient material wrapped by the dough sheet. Such combined mouth feel touch is present usually in the spring roll immediately after frying.

However, if the spring roll is sold in larger quantities in, for example, a supermarket, it cannot necessarily be offered in the fresh fried state. Besides, such fresh fried spring roll is not necessarily eaten by the consumers soon after it is bought, such that it takes usually four to six hours since the spring roll is fried until it is eaten by the consumers. If several hours have elapsed since frying, the moisture contained in the ingredient material is absorbed by the fresh fried crispy dough sheet. In addition, if the spring roll is wrapped for sale in the supermarket or the like, such moisture absorption by the dough sheet of the spring roll tends to be promoted, such that the crispy mouth feel touch proper to the dough sheet of the spring roll is lowered.

Alternatively, when rolling up an ingredient material with a dough sheet of a spring roll, the dough sheet has been conventionally rolled up or wrapped tightly around the ingredient material, particularly tightly around overlapping folded portions of the dough sheet so that any gap in which air is present between the folded dough sheet portions does not exist for preventing the air from being expanded and exploded upon frying the spring roll, thus damaging the product spring rolls.

### SUMMARY OF THE INVENTION

It is therefore an object of the present invention to provide a method for producing a spring roll with which the mouth feel touch of the dough sheet of the spring roll is lowered only to a lesser extent after lapse of several hours since frying and the crispy mouth feel touch proper to the dough sheet of the spring roll immediately after frying may be maintained for longer time.

These and other objects of the present invention will become apparent from the following description.

According to the present invention, there is provided a method for preparing a spring roll comprising the steps of: (a) putting an ingredient material on a dough sheet of the spring roll and tightly winding the ingredient material with the dough sheet to obtain a tightly wound spring roll; (b) loosely winding a portion of the dough sheet of the spring roll to thereby obtain a spring roll having a loosely wound portion; and (c) frying the spring roll so that oil passes through gap formed by the loosely wound portion of the dough sheet, to thereby fry a dough sheet portion facing said gap with oil passed through the gap.

### BRIEF DESCRIPTION OF THE DRAWINGS

Figs. 1(a) to (e) are schematical views showing how to roll up a pre-treated spring roll ready to finally wind up a finished spring roll.
Figs. 2(a) and (b) are schematical views showing how to roll up a finished spring roll in accordance with first and second embodiments of the present invention.
Figs. 3(a) to (c) are schematical views showing how to roll up a finished spring roll in accordance with a third embodiment of the present invention.
Figs. 4(a) to (d) are schematical views showing how to roll up a finished spring roll in accordance with a fourth embodiment of the present invention.

### PREFERRED EMBODIMENTS OF THE INVENTION

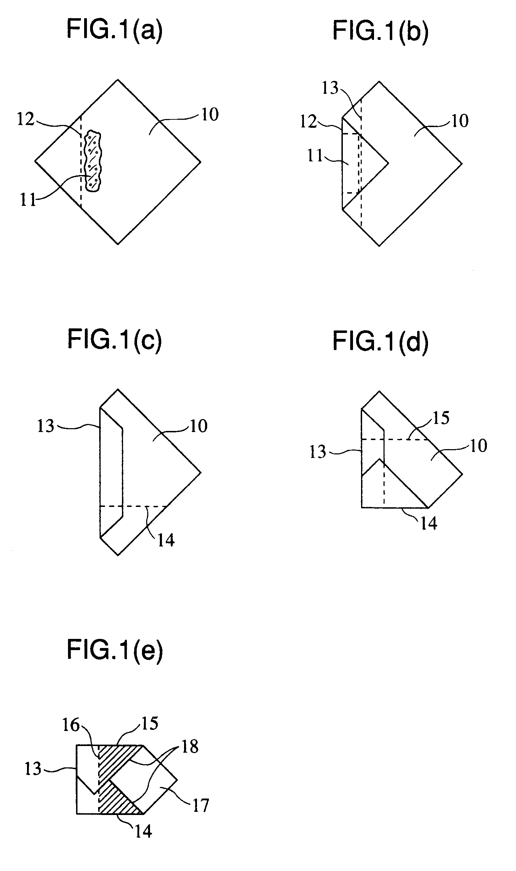

Referring to Figs. 1(a) to (e), the steps of preparing a pre-treated spring roll before the remaining portion of a dough sheet 10 of the spring roll is finally wound to complete the finished spring roll are explained.

Firstly, as shown in Fig. 1(a), an ingredient material 11 is put on the dough sheet 10 of the spring roll to be made. The dough sheet 10 may be prepared from baked wheat powders or boiled starch such as tapioca starch. The ingredient material 11 may be a commonly known material prepared by cooking and seasoning desired food materials such as meats, vegetables, fishes or shells.

Referring to Fig. 1(a), the dough sheet 10 is folded along a dotted line 12 to tightly cover the ingredient material 11 as shown in Fig. 1(b) to avoid air to be incorporated as small as possible. The dough sheet 10 is subsequently folded along a dotted ling 13 in Fig. 1(b) to roll or wrap up tightly the ingredient material 11 to again avoid air as small as possible to form a rolled spring roll shown in Fig. 1(c). The dough sheet 10 is then folded along a dotted line 14 toward the inside as shown in Fig. 1(c) and further along a dotted line 15 in Fig. 1(d) toward the inside such that the ingredient material 11 does not leak from the both sides of the spring roll to be tightly wrapped up, thereby preparing a pre-treated spring roll in Fig. 1(e) ready to roll up a final wind of the spring roll dough sheet 10. In Fig. 1(e), the right side portion separated by a dotted line 16 is subjected to the final winding. In Fig. 1(e) shaded portions are overlapped dough sheet portions, a reference numeral 17 denotes a non-overlapped dough sheet portion, and a reference numeral 18 denotes a boundary line between the non-overlapped portion and the overlapped portions.

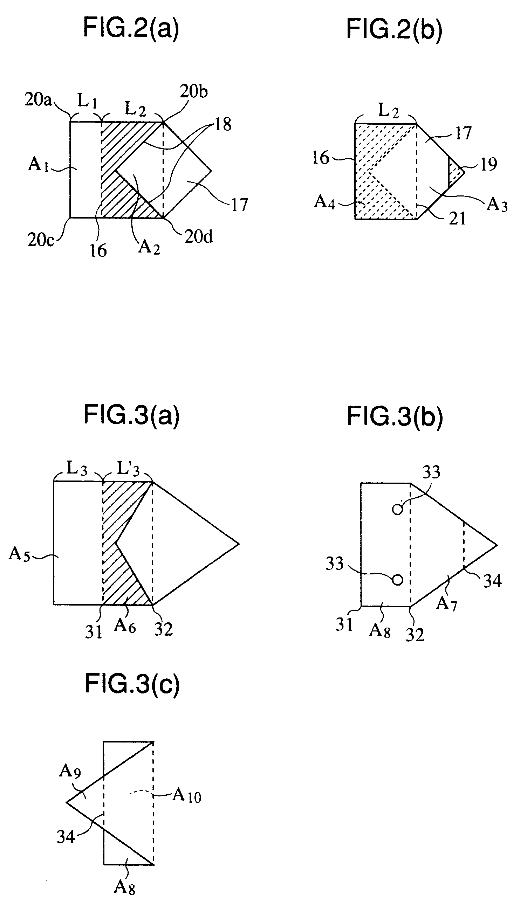

Now, referring to Figs. 2(a) and (b), the final winding of the dough sheet of the spring roll is described hereunder.

Fig. 2(a) is the same as Fig. 1(e) but the dimensional relationship is depicted in more detail. In a first embodiment shown in Fig. 2(a) L₂ is longer than L₁ so that a dough sheet surface portion A₂ having the side length L₂ is larger than the dough sheet surface portion A₁ having the side length L₁. The dough sheet is then loosely rolled or wound along a dotted line 16 in such a manner that the corners 20a and 20c of the dough sheet portion A₁ are placed on the corners 20b and 20d of the dough sheet portion A₂, respectively. In Fig. 2(b), a spring roll thus loosely wound is shown. Finally, a starch adhesive and the like are applied to the overall surface A₃ of the non-overlapped dough sheet portion 17, which is then folded along a dotted line 21 and tightly attached to the already wound dough sheet portion A₄. In the first embodiment, since the dough sheet portion A₁ is not tightly rolled or wound onto the dough sheet portion A₂ as described above, when the spring roll is fried, oil passes through the gap formed by the dough sheet surface portions A₁ and A₂ so that the dough sheet surfaces A₁ and A₂ are also fried in addition to the outermost surface of the finished spring roll. After frying, the dough sheet portion A₁ may preferably be separated from the dough sheet portion A₂ by a distance of 1mm or more, and more preferably 2 to 5mm. Since the dough sheet surfaces A₁ and A₂ as well as the outermost surface of the finished spring roll are fried with oil, the crispy mouth feel touch is maintained even after the lapse of several hours after frying. Besides, the boundary line 18 between the non-overlapped portion 17 and the overlapped portions (shaded portions in Fig. 2(a)) of the dough sheet faces the gap formed by the dough sheet portions A₁ and A₂, air necessarily incorporated into the folded or overlapped dough sheet portions can pass through the gap upon frying the spring roll, thus preventing air explosion from occurring upon frying.

Referring back to Fig. 2(b), the dough sheet portion A₃ of the non-overlapped dough sheet portion 17 may preferably have a surface area A₃ of at least 40%, more preferably at least 50% relative to one side surface area A₄ of the spring roll to be finished. In the previously described first embodiment, a starch adhesive and the like are applied to the overall surface portion A₃ of the non-overlapped dough sheet portion 17, which is tightly attached to the dough sheet surface portion A₄. In a second embodiment, a starch adhesive is applied only partially to a portion 19 of the non-overlapped dough sheet portion 17, which is then loosely folded and attached to the dough sheet surface portion A₄ so that a second gap is formed between the dough sheet surfaces A₃ and A₄. In this second embodiment, oil passes through the second gap when fried so that the dough sheet surfaces A₃ and A₄ facing the second gap is fried in addition to the dough sheet surfaces A₁ and A₂.

In Figs. 3(a) to (c), a third embodiment is shown. The steps for preparing the pre-treated spring roll ready for the final winding described in Figs. 1(a) to (e) are repeated. As shown in Fig. 3(a), a dough sheet portion A₅ having the side length L₃ is substantially the same as a dough sheet portion A₆ having the side length L'₃. The dough sheet surface portion A₅ is closely contacted with and tightly folded along a dotted line 31 onto the dough sheet surface portion A₆. Thus, no gap is formed between the surfaces A₅ and A₆. The thus rolled spring roll is shown in Fig. 3(b). In the spring roll shown in Fig. 3(b), a dough sheet surface portion A₇ has more than 40% surface area relative to a dough sheet surface portion A₈ when loosely folded along a dotted line 32 so that the dough sheet surface A₇ is loosely contacted with and attached to the dough sheet surface A₈. Thus, when fried, a gap or space is formed between the dough sheet surfaces A₇ and A₈. In order to leak air into the gap between the dough sheet surfaces A₇ and A₈ upon frying to thereby prevent air explosion, air vent holes 33 are formed through the dough sheet portion A₈. Finally, as shown in Fig. 3(c), a dough sheet portion A₉ partially or wholly attached with a starch adhesive is folded along a dotted line 34. Since the dough sheet surface A₉ has an area of less than 40% relative to the other side of the dough sheet surface A₁₀ opposite to the dough sheet surface A₈, the surface A₉ may either tightly or loosely attached to the surface A₁₀. As you will see from the third embodiment shown in Figs. 3(a) to (c), at least 40% of the dough sheet surface of the rolled up spring roll may preferably have a gap through which oil passes when fried so as to maintain crispy mouth feel touch.

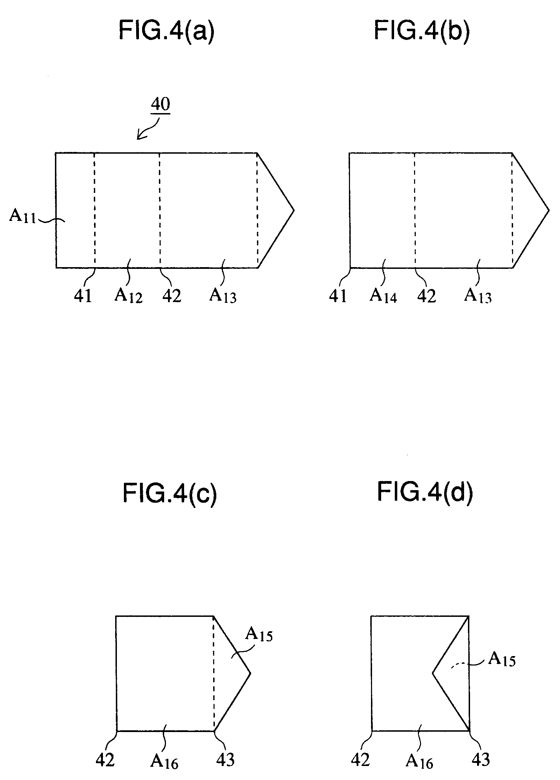

In Figs. 4(a) to (d), a fourth embodiment of a spring roll is shown. The steps for preparing the pre-treated spring roll ready for final winding described in Figs. 1(a) to (e) are generally repeated to obtain the spring roll 40 shown in Fig. 4(a), in which the dough sheet surface areas are larger in the order of A₁₁<A₁₂<A₁₃. When folded along a dotted line 41, the dough sheet surface portion A₁₁ is contacted with the dough sheet surface portion A₁₂ to form a first gap therebetween. Since a dough sheet surface portion A₁₄ is still smaller than the dough sheet surface portion A₁₃, when folded along a dotted line 42 in Fig. 4(b), a second gap is formed between the surfaces A₁₃ and A₁₄ when the spring roll is fried. The last dough sheet portion A₁₅ shown in Fig. 4(c) has a surface area 40% or less smaller than a dough sheet surface portion A₁₆, a starch adhesive may be partially or wholly attached to the dough sheet surface A₁₅, which may be tightly or loosely attached to the surface A₁₆ by folding along a dotted line 43. When the dough sheet surface portion A₁₅ is loosely attached to the surface portion A₁₆, a third gap is formed upon frying between the surfaces A₁₅ and A₁₆ in a small area of less than 40% relative to the surface A₁₆. Thus, when frying a rolled up spring roll shown in Fig. 4(d), the first to third gaps at most are formed between the surfaces A₁₁ and A₁₂ (Fig. 4(a)), between the surfaces A₁₃ and A₁₄ (Fig. 4(b)) and between the surfaces A₁₅ and A₁₆ (Fig. 4(c)). As described in this embodiment, the gaps through which oil passes when fried may preferably have the above mentioned first to third gaps at most since more gaps will adversely affect the soft mouth feel touch f the dough sheet and the ingredient material. It is to be noted that the spring roll requires both crispy mouth feel touch of its surface and soft mouth feel touch of its inner contents.

In regard to the second to fourth embodiments, the gaps or spaces formed upon frying the loosely wound dough sheet portions may also preferably have 1mm or more, and more preferably 2 to 5mm similarly to the first embodiment.

In the method of the present invention, a spring roll product obtained by rolling up the dough sheet of the spring roll can be fried using cooking oil of, for example, 170 to 200°C. The spring roll products obtained can be stored in a refrigerator or frozen before frying. The freezing may preferably be carried out at -15°C to -25°C. When the spring roll products are stored in a vessel, they may preferably be stored so that the gap-forming surfaces of the spring rolls upon frying are on the top faces.

### EXAMPLES OF THE INVENTION

The present invention will now be explained with reference to Examples and Comparative Example. It is noted that these Examples are given only for illustration and are not intended for limiting the invention.

### Examples 1 and 2 and Comparative Example 1

Spring rolls were rolled up as described above in accordance with the first embodiment with reference to Figs. 1(a) to (e) and Figs. 2(a) and (b) (Example 1). Alternatively, spring rolls were rolled up as described above with reference to Figs. 1(a) to (e) and Figs. 3(a) to (c) in accordance with the third embodiment in which the dough sheet portion A₉ is wholly attached with a starch adhesive (Example 2). In the meanwhile, spring rolls were prepared in the conventional manner by tightly rolling up the dough sheets without loosely winding the dough sheets for forming gaps therebetween upon frying (Comparative Example 1).

The spring rolls thus prepared were frozen at -40°C in a freezing chamber and stored for three days at -20°C followed by thawing. Each roll was then fried with salad oil at 180°C and freed of oil. After cooling for several minutes, each roll was contained in a tray of expanded polystyrene and covered with a wrap. Each spring roll thus wrapped was allowed to cool at room temperature for five hours. The spring rolls were eaten by ten panellers and the crispy mouth feel touch of each dough sheet was evaluated in accordance with the following standards by marks of from 1 to 5. The mean marks given by the ten panellers are shown in Table 1.

1: no crispy mouth feel touch; 2: only slight crispy mouth feel touch; 3: general crispy mouth feel touch; 4: sufficient crispy mouth feel touch; 5: markedly sufficient crispy mouth feel touch.

The mean distance between the dough sheet surfaces formed by the gaps after frying the spring rolls are also shown in Table 1. Statistical tests were conducted for the spring rolls of different groups of Examples 1 and 2 and Comparative Example 1 based on the results of the mouth feel touch evaluation. The results are shown in Table 2.

**Table 1**

| | Mean marks of mouth feel touch | Mean distance (mm) |
|---|---|---|
| Comp. Ex.1 | 1.75 | 0 |
| Ex. 1 | 4.25 | 2 |
| Ex. 2 | 3.05 | 2 |

**Table 2**

| | |
|---|---|
| Between Comp. Ex. 1 and Ex. 2 | Significant difference present (Level of 1%) |
| Between Comp. Ex. 1 and Ex. 1 | Significant difference present (Level of 1%) |
| Between Ex. 1 and Ex. 2 | Significant difference present (Level of 1%) |

## Claims

1. A method for preparing a spring roll comprising the steps of:
(a) putting an ingredient material (11) on a dough sheet (10) of the spring roll and tightly winding said ingredient material (11) with said dough sheet (10) to obtain a tightly wound spring roll;
(b) loosely winding a portion of the dough sheet of the spring roll to thereby obtain a spring roll having a loosely wound portion (A₁, A₂, A₇, A₈, A₁₁, A₁₂, A₁₃, A₁₄); and
(c) frying said spring roll so that oil passes through gap formed by said loosely wound portion (A₁, A₂, A₇, A₈, A₁₁, A₁₂, A₁₃, A₁₄) of the dough sheet, to thereby fry a dough sheet portion facing said gap with oil passed through the gap.

2. The method according to claim 1 wherein said gap formed by said dough sheet has a distance of not less than 1mm after said spring roll is fried in said step (c).

3. The method according to claim 1 wherein in said step (b) the portion (A₂) of the dough sheet is loosely wound to cover an entire one side surface portion (A₁) of the tightly wound spring roll obtained in said step (a) while leaving a non-wound remaining dough sheet portion (A₃), to obtain a once loosely wound spring roll, and said non-wound remaining dough sheet portion (A₃) applied with an adhesive on its entire surface is then folded and tightly attached to said once loosely wound spring roll.

4. The method according to claim 1 wherein in said step (b) the portion (A₂) of the dough sheet is loosely wound to cover an entire one side surface portion (A₁) of the tightly wound spring roll obtained in said step (a) while leaving a non-wound remaining dough sheet portion (A₃), to obtain a once loosely wound spring roll, and said non-wound remaining dough sheet portion (A₃) applied with an adhesive on its partial surface portion (19) is then folded and loosely attached to said once loosely wound spring roll.

5. The method according to claim 3 wherein said non-wound remaining dough sheet portion (A₃) has a surface area of at least 40% relative to one side surface area (A₄) of said once loosely wound spring roll.

6. The method according to claim 4 wherein said non-wound remaining dough sheet portion (A₃) has a surface area of at least 40% relative to one side surface area (A₄) of said once loosely wound spring roll.

7. The method according to claim 1 wherein in said step (b) the portion (A₇) of the dough sheet is loosely wound to partially cover a one side surface portion (A₈) of the tightly wound spring roll obtained in said step (a) while leaving a non-wound remaining dough sheet portion (A₉), said portion (A₇) of the dough sheet having a surface area of at least 40% relative to said one side surface portion (A₈) of the tightly wound spring roll, said non-wound remaining dough sheet portion (A₉) having a surface area of less than 40% relative to the other side surface portion (A₁₀) of the tightly wound spring roll and wherein said non-wound remaining dough sheet portion (A₉) applied with an adhesive on its entire surface is then folded and tightly attached to said other side surface portion (A₁₀) of the tightly wound spring roll.

8. The method according to claim 1 wherein in said step (b) the portion (A₇) of the dough sheet is loosely wound to partially cover a one side surface portion (A₈) of the tightly wound spring roll obtained in said step (a) while leaving a non-wound remaining dough sheet portion (A₉), said portion (A₇) of the dough sheet having a surface area of at least 40% relative to said one side surface portion (A₈) of the tightly wound spring roll, said non-wound remaining dough sheet portion (A₉) having a surface area of less than 40% relative to the other side surface portion (A₁₀) of the tightly wound spring roll and wherein said non-wound remaining dough sheet portion (A₉) applied with an adhesive on its partial surface is then folded and loosely attached to said other side surface portion (A₁₀) of the tightly wound spring roll.

9. The method according to claim 1 wherein in said step (b) the portion (A₁₂) of the dough sheet is loosely wound to cover an entire one side surface portion (A₁₁) of the tightly wound spring roll obtained in said step (a) while leaving a non-wound remaining dough sheet portion (A₁₃, A₁₅), to obtain a once loosely wound spring roll, the non-wound remaining dough sheet portion (A₁₃, A₁₅) is loosely wound to cover an entire one side surface portion (A₁₄) of said once loosely wound spring roll while leaving a non-wound still remaining dough sheet portion (A₁₅), to obtain a twice loosely wound spring roll, and said non-wound still remaining dough sheet portion (A₁₅) applied with an adhesive on its entire surface is then folded and tightly attached to said twice loosely wound spring roll, said non-wound still remaining dough sheet portion (A₁₅) having a surface area of less than 40% relative to one side surface area (A₁₆) of said twice loosely wound spring roll.

10. The method according to claim 1 wherein in said step (b) the portion (A₁₂) of the dough sheet is loosely wound to cover an entire one side surface portion (A₁₁) of the tightly wound spring roll obtained in said step (a) while leaving a non-wound remaining dough sheet portion (A₁₃, A₁₅), to obtain a once loosely wound spring roll, the non-wound remaining dough sheet portion (A₁₃, A₁₅) is loosely wound to cover an entire one side surface portion (A₁₄) of said once loosely wound spring roll while leaving a non-wound still remaining dough sheet portion (A₁₅), to obtain a twice loosely wound spring roll, and said non-wound still remaining dough sheet portion (A₁₅) applied with an adhesive on its partial surface is then folded and loosely attached to said twice loosely wound spring roll, said non-wound still remaining dough sheet portion (A₁₅) having a surface area of less than 40% relative to one side surface area (A₁₆) of said twice loosely wound spring roll.

11. The method according to claim 1 wherein at least one air vent hole (33) is formed through said tightly wound spring roll obtained in said step (a) to leak air into said gap when frying the spring roll in said step (c).

12. The method according to claim 1 wherein at least one folded line (18) of said tightly wound spring roll obtained in said step (a) faces said loosely wound portion (A₁, A₂) of the dough sheet in said step (b) to leak air into said gap when frying the spring roll in said step (c).

## Patentansprüche

1. Verfahren zum Zubereiten einer Frühlingsrolle mit folgenden Schritten:
(a) Legen eines Füllmaterials (11) auf ein Teigblatt (10) der Frühlingsrolle und festes Wickeln des Füllmaterials (11) mit dem Teigblatt (10), um eine fest gewickelte Frühlingsrolle zu erhalten,
(b) Lockerwickeln eines Abschnittes des Teigblattes der Frühlingsrolle, um eine Frühlingsrolle mit einem locker gewickelten Abschnitt (A₁, A₂, A₇, A₈, A₁₁, A₁₂, A₁₃, A₁₄) zu erhalten, und
(c) Frittieren der Frühlingsrolle so, daß Öl durch einen Spalt des locker gewickelten Abschnittes (A₁, A₂, A₇, A₈, A₁₁, A₁₂, A₁₃, A₁₄) des Teigblattes tritt, wodurch der Teigblattabschnitt gegenüber des Spalts in durch den Spalt getretenem Öl frittiert wird.

2. Verfahren nach Anspruch 1, bei dem der durch das Teigblatt gebildete Spalt eine Weite von mindestens 1 mm hat, nachdem die Frühlingsrolle im Schritt (c) frittiert wurde.

3. Verfahren nach Anspruch 1, bei dem in Schritt (b) der Abschnitt (A₂) des Teigblattes locker gewickelt wird, um einen Seitenflächenabschnitt (A₁) der fest gewickelten Frühlingsrolle aus Schritt (a) zur Gänze zu bedecken und zugleich einen nicht gewickelten, verbleibenden Teigblattabschnitt (A₃) zu belassen, so daß eine einmal locker gewickelte Frühlingsrolle erhalten wird, und bei dem der nicht gewickelte, verbleibende Teigblattabschnitt (A₃) mit einem Haftmittel an seiner gesamten Fläche versehen, dann gefaltet und fest an der einmal locker gewickelten Frühlingsrolle angebracht wird.

4. Verfahren nach Anspruch 1, bei dem in Schritt (b) der Abschnitt (A₂) des Teigblattes locker gewickelt wird, um einen Seitenflächenabschnitt (A₁) der fest gewickelten Frühlingsrolle aus Schritt (a) zur Gänze zu bedecken und zugleich einen nicht gewickelten, verbleibenden Teigblattabschnitt (A₃) zu belassen, so daß eine einmal locker gewickelte Frühlingsrolle erhalten wird, und bei dem der nicht gewickelte, verbleibende Teigblattabschnitt (A₃) mit einem Haftmittel an einem Oberflächenteilabschnitt (19) versehen, dann gefaltet und locker an der einmal locker gewickelten Frühlingsrolle angebracht wird.

5. Verfahren nach Anspruch 3, bei dem der nicht gewickelte, verbleibende Teigblattabschnitt (A₃) eine Fläche von mindestens 40 Prozent bezogen auf eine Seitenfläche (A₄) der einmal locker gewickelten Frühlingsrolle hat.

6. Verfahren nach Anspruch 4, bei dem der nicht gewickelte, verbleibende Teigblattabschnitt (A₃) eine Fläche von mindestens 40 Prozent bezogen auf eine Seitenfläche (A₄) der einmal locker gewickelten Frühlingsrolle hat.

7. Verfahren nach Anspruch 1, bei dem in Schritt (b) der Abschnitt (A₇) des Teigblattes locker gewickelt wird, um teilweise einen Seitenflächenabschnitt (A₃) der fest gewickelten Frühlingsrolle aus Schritt (a) zu bedecken und zugleich einen nicht gewickelten, verbleibenden Teigblattabschnitt (A₉) zu belassen, wobei der Abschnitt (A₇) des Teigblattes eine Fläche von mindestens 40 Prozent bezogen auf einen Seitenflächenabschnitt (A₈) der fest gewickelten Frühlingsrolle hat, der nicht gewickelte verbleibende Teigblattabschnitt (A₉) eine Fläche von mindestens 40 Prozent bezogen auf den anderen Seitenflächenabschnitt (A₁₀) der fest gewickelten Frühlingsrolle hat, und wobei der nicht gewickelte verbleibende Teigblattabschnitt (A₉) mit Haftmittel an seiner gesamten Fläche versehen, dann gefaltet und fest am anderen Seitenflächenabschnitt (A₁₀) der fest gewickelten Frühlingsrolle angebracht wird.

8. Verfahren nach Anspruch 1, bei dem in Schritt (b) der Abschnitt (A₇) des Teigblattes locker gewickelt wird, um teilweise einen Seitenflächenabschnitt (A₃) der fest gewickelten Frühlingsrolle aus Schritt (a) zu bedecken und zugleich einen nicht gewickelten, verbleibenden Teigblattabschnitt (A₉) zu belassen, wobei der Abschnitt (A₇) des Teigblattes eine Fläche von mindestens 40 Prozent bezogen auf einen Seitenflächenabschnitt (A₈) der fest gewickelten Frühlingsrolle hat, der nicht gewickelte verbleibende Teigblattabschnitt (A₉) eine Fläche von mindestens 40 Prozent bezogen auf den anderen Seitenflächenabschnitt (A₁₀) der fest gewickelten Frühlingsrolle hat, und wobei der nicht gewickelte verbleibende Teigblattabschnitt (A₉) mit Haftmittel auf seiner Teilfläche versehen, dann gefaltet und locker am anderen Seitenflächenabschnitt (A₁₀) der fest gewickelten Frühlingsrolle angebracht wird.

9. Verfahren nach Anspruch 1, bei dem in Schritt (b) der Abschnitt (A₁₂) des Teigblattes locker gewickelt wird, um einen Seitenflächenabschnitt (A₁₁) der fest gewickelten Frühlingsrolle aus Schritt (a) zur Gänze zu bedecken und zugleich einen nicht gewickelten, verbleibenden Teigblattabschnitt (A₁₃, A₁₅) zu belassen, um eine einmal locker gewickelte Frühlingsrolle zu erhalten, wobei der nicht gewickelte, verbleibende Teigblattabschnitt (A₁₃, A₁₅) locker gewickelt wird, um einen Seitenflächenabschnitt (A₁₄) der einmal locker gewickelten Frühlingsrolle zur Gänze zu bedecken und zugleich einen nicht gewickelten, immer noch verbleibenden Teigblattabschnitt (A₁₅) zu belassen, um eine zweimal locker gewickelte Frühlingsrolle zu erhalten, wobei der nicht gewickelte, immer noch verbleibende Teigblattabschnitt (A₁₅) mit einem Haftmittel an seiner gesamten Fläche versehen, dann gefaltet und fest an der zweimal locker gewickelten Frühlingsrolle angebracht wird, wobei der nicht gewickelte, immer noch verbleibende Teigblattabschnitt (A₁₅) eine Fläche unter 40 Prozent bezogen auf eine Seitenfläche (A₁₆) der zweimal locker gewickelten Frühlingsrolle hat.

10. Verfahren nach Anspruch 1, bei dem in Schritt (b) der Abschnitt (A₁₂) des Teigblattes locker gewickelt wird, um einen Seitenflächenabschnitt (A₁₁) der fest gewickelten Frühlingsrolle aus Schritt (a) zur Gänze zu bedecken und zugleich einen nicht gewickelten, verbleibenden Teigblattabschnitt (A₁₃, A₁₅) zu belassen, um eine einmal locker gewickelte Frühlingsrolle zu erhalten, wobei der nicht gewickelte, verbleibende Teigblattabschnitt (A₁₃, A₁₅) locker gewickelt wird, um einen Seitenflächenabschnitt (A₁₄) der einmal locker gewickelten Frühlingsrolle zur Gänze zu bedecken und zugleich einen nicht gewickelten, immer noch verbleibenden Teigblattabschnitt (A₁₅) zu belassen, um eine zweimal locker gewickelte Frühlingsrolle zu erhalten, wobei der nicht gewickelte, immer noch verbleibende Teigblattabschnitt (A₁₅) mit einem Haftmittel auf seiner Teilfläche versehen, dann gefaltet und locker an der zweimal lokker gewickelten Frühlingsrolle angebracht wird, wobei der nicht gewickelte, immer noch verbleibende Teigblattabschnitt (A₁₅) eine Fläche unter 40 Prozent bezogen auf die eine Seitenfläche (A₁₆) der zweimal locker gewickelten Frühlingsrolle hat.

11. Verfahren nach Anspruch 1, bei dem mindestens ein Belüftungsloch (33) durch die fest gewickelte Frühlingsrolle aus Schritt (a) gebildet wird, um Luft in den Spalt einzulassen, wenn die Frühlingsrolle in Schritt (c) frittiert wird.

12. Verfahren nach Anspruch 1, bei dem mindestens eine Knicklinie (18) der fest gewickelten Frühlingsrolle aus Schritt (a) dem locker gewickelten Abschnitt (A₁, A₂) des Teigblattes aus Schritt (b) gegenüberliegt, um Luft in den Spalt einzulassen, wenn die Frühlingsrolle in Schritt (c) frittiert wird.

## Revendications

1. Procédé pour la préparation d'un rouleau de printemps comprenant les étapes consistant :
(a) à déposer un matériau constituant l'ingrédient (11) sur une feuille de pâte (10) du rouleau de printemps et à enrouler fermement ledit matériau constituant l'ingrédient (11) avec ladite feuille de pâte (10) pour obtenir un rouleau de printemps fermement enroulé;
(b) à enrouler de manière lâche une partie de la feuille de pâte du rouleau de printemps pour obtenir par là un rouleau de printemps présentant une partie enroulée de manière lâche (A₁ A₂, A₇, A₈, A₁₁, A₁₂, A₁₃, A₁₄); et
(c) à faire frire ledit rouleau de printemps de telle sorte que de l'huile passe à travers l'espace formé par ladite partie enroulée de manière lâche (A₁, A₂, A₇, A₈, A₁₁, A₁₂, A₁₃, A₁₄) de la feuille de pâte, pour faire frire par là une partie de feuille de pâte faisant face audit espace avec de l'huile étant passée à travers l'espace.

2. Procédé selon la revendication 1, dans lequel ledit espace formé par ladite feuille de pâte présente une distance d'au moins 1 mm après que ledit rouleau de printemps est frit dans ladite étape (c).

3. Procédé selon la revendication 1, dans lequel dans ladite étape (b) la partie (A₂) de feuille de pâte est enroulée de manière lâche pour recouvrir une partie entière de surface sur un côté (A₁) du rouleau de printemps fermement enroulé obtenu dans ladite étape (a) tout en laissant une partie de feuille de pâte restant non enroulée (A₃) pour obtenir un rouleau de printemps enroulé une fois de manière lâche, et ladite partie de feuille de pâte restant non enroulée (A₃) à laquelle est appliqué un adhésif sur sa surface entière est ensuite pliée et fermement fixée audit rouleau de printemps enroulé une fois de manière lâche.

4. Procédé selon la revendication 1, dans lequel dans ladite étape (b) la partie (A₂) de feuille de pâte est enroulée de manière lâche pour recouvrir une partie entière de surface sur un côté (A₁) du rouleau de printemps fermement enroulé obtenu dans ladite étape (a) tout en laissant une partie de feuille de pâte restant non enroulée (A₃) pour obtenir un rouleau de printemps enroulé une fois de manière lâche, et ladite partie de feuille de pâte restant non enroulée (A₃) à laquelle est appliqué un adhésif sur sa partie partielle de surface (19) est ensuite pliée et fixée de manière lâche audit rouleau de printemps enroulé une fois de manière lâche.

5. Procédé selon la revendication 3. dans lequel ladite partie de feuille de pâte restant non enrouée (A₃) présente une surface d'au moins 40% relative à une surface sur un côté (A₄) dudit rouleau de printemps enroulé une fois de manière lâche.

6. Procédé selon la revendication 4, dans lequel ladite partie de feuille de pâte restant non enroulée (A₃) présente une surface d'au moins 40% relative à une surface sur un côté (A₄) dudit rouleau de printemps enroulé une fois de manière lâche.

7. Procédé selon la revendication 1, dans lequel dans ladite étape (b) la partie (A₇) de la feuille de pâte est enroulée de manière lâche pour recouvrir partiellement une partie de surface sur un côté (A₈) du rouleau de printemps fermement enroulé obtenu dans ladite étape (a) tout en laissant une partie de feuille de pâte restant non enroulée (A₉), ladite partie (A₇) de la feuille de pâte ayant une surface d'au moins 40% relative à ladite partie de surface sur un côté (A₈) du rouleau de printemps fermement enroulé, ladite partie de feuille de pâte restant non enroulée (A₉) présentant une surface inférieure à 40% relative à la partie de surface sur l'autre côté (A₁₀) du rouleau de printemps fermement enroulé et dans lequel ladite partie de feuille de pâte restant non enroulée (A₉) à laquelle est appliqué un adhésif sur sa surface totale est ensuite pliée et fermement fixée à ladite partie de surface sur l'autre côté (A₁₀) du rouleau de printemps fermement enroulé.

8. Procédé selon la revendication 1, dans lequel dans ladite étape (b) la partie (47) de la feuille de pâte est enroulée de manière lâche pour recouvrir partiellement une partie de surface sur un côté (A₈) du rouleau de printemps fermement enroulé obtenu dans ladite étape (a) tout en laissant une partie de feuille de pâte restant non enroulée (A₉), ladite partie (A₇) de la feuille de pâte présentant une surface d'au moins 40% relative à ladite partie sur un côté (A₈) du rouleau de printemps fermement enroulé, ladite partie de feuille de pâte restant non enroulée (A₉) présentant une surface inférieure à 40% relative à la partie de surface sur l'autre côté (A₁₀) du rouleau de printemps fermement enroulé et dans lequel ladite partie de feuille de pâte restant non enroulée (A₉) à laquelle est appliqué un adhésif sur sa surface partielle est ensuite pliée et fixée de manière lâche à ladite partie de surface sur l'autre côté (A₁₀) du rouleau de printemps fermement enroule.

9. Procédé selon la revendication 1, dans lequel dans ladite étape (b) la partie (A₁₂) de la feuille de pâte est enroulée de manière lâche pour recouvrir une partie de surface entière sur un côté (A₁₁) du rouleau de printemps fermement enroulé obtenu dans ladite étape (a) tout en laissant une partie de feuille de pâte restant non enroulée (A₁₃, A₁₅) pour obtenir un rouleau de printemps enroulé une fois de manière lâche, la partie de feuille de pâte restant non enroulée (A₁₃, A₁₅) est enroulée de manière lâche pour recouvrir une partie de surface entière sur un côté (A₁₄) dudit rouleau de printemps enroulé une fois de manière lâche tout en laissant une partie de feuille de pâte restant encore non enroulée (A₁₅) pour obtenir un rouleau de printemps enroulé deux fois de manière lâche, et ladite partie de feuille de pâte restant encore non enroulée (A₁₅) à laquelle est appliqué un adhésif sur sa surface totale est ensuite pliée et fermement fixée audit rouleau de printemps enroulé deux fois de manière lâche, ladite partie de feuille de pâte restant encore non enroulée (A₁₅) présentant une surface inférieure à 40% relative à une surface sur un côté (A₁₆) dudit rouleau de printemps enroulé deux fois de manière lâche.

10. Procédé selon la revendication 1, dans lequel dans ladite étape (b) la partie (A₁₂) de la feuille de pâte est enroulée de manière lâche pour recouvrir une partie de surface entière sur un côté (A₁₁) du rouleau de printemps fermement enroulé obtenu dans ladite étape (a) tout en laissant une partie de feuille de pâte restant non enroulée (A₁₃, A₁₅) pour obtenir un rouleau de printemps enroulé une fois de manière lâche, la partie de feuille de pâte restant non enroulée (A₁₃, A₁₅) est enroulée de manière lâche pour recouvrir une partie de surface entière sur un côté (A₁₄) dudit rouleau de printemps enroulé une fois de manière lâche tout en laissant une partie de feuille de pâte restant encore non enroulée (A₁₅) pour obtenir un rouleau de printemps enroulé deux fois de manière lâche et ladite partie de feuille de pâte restant encore non enroulée (A₁₅) à laquelle est appliqué un adhésif sur sa surface partielle est ensuite pliée et fixée de manière lâche audit rouleau de printemps enroulé deux fois de manière lâche, ladite partie de feuille de pâte restant encore non enroulée (A₁₅) présentant une surface inférieure à 40% relative à une surface sur un côté (A₁₆) dudit rouleau de printemps enroulé deux fois de manière lâche.

11. Procédé selon la revendication 1, dans lequel au moins un orifice de mise à l'air (33) est formé à travers ledit rouleau de printemps fermement enroulé obtenu dans ladite étape (a) pour laisser fuir l'air dans ledit espace lors de la friture du rouleau de printemps dans ladite étape (c).

12. Procédé selon la revendication 1, dans lequel au moins une ligne pliée (18) dudit rouleau de printemps fermement enroulé obtenu dans ladite étape (a) fait face à ladite partie enroulée de manière lâche (A₁, A₂) de la feuille de pâte dans ladite étape (b) pour laisser fuir l'air dans ledit espace lors de la friture du rouleau de printemps dans ladite étape (c).
